# EUROPEAN PATENT SPECIFICATION

(11) **EP 0 436 262 B1**
(45) Date of publication and mention of the grant of the patent: **30.03.1994**
(21) Application number: 90300008.1
(22) Date of filing: 02.01.1990
(51) Int. Cl.: G09F 9/37

(54) **Magnetic display system**
Magnetische Anzeigevorrichtung
Système d'affichage magnétique

(43) Date of publication of application: 10.07.1991
(73) Proprietor: JAPAN CAPSULAR PRODUCTS, INC., Chiyoda-ku, Tokyo 101 (JP)
(72) Inventor: Nakanishi, Masayuki, Kohza-gun Kanagawa-ken (JP)
(74) Representative: Ben-Nathan, Laurence Albert

(56) References cited:
- MESURES, vol. 46. no. 2, February 1981, pages 83-85, Paris, FR; "Bientot des écrans plats a billes orientables"
- INTERFACE AGE, vol. 7, no. 3, March 1982, pages 28-33, CERRITOS, CA, US; R.C.GARRETT: "Magnetic liquid display"

## Description

This invention relates to a magnetic display system which utilizes coatings of microcapsules containing light-absorptive magnetic particles and light-reflective non-magnetic particles in dispersing oily medium and interchanges each cluster of the particles position whithin the individual microcapsules for absorption or reflection of light to thereby form a contrast image of brightness and darkness of the two.

As prior art concerning magnetic display system, there is one, in which a transparent plastic sheet is formed over the entire surface with honeycomb-like cavities each with a dimension of about 2 mm as one side and depth, each cavity is filled with white pigment liquid and magnetic particles and is sealed with a transparent sheet to prevent leakage of the filling matter. In this case, a rod-like permanent magnet is shifted over the entire display surface from one end of the back surface of magnetic display plate to the other, thus bringing magnetic particles in each honeycomb-like cavity toward the back side of the display plate and leaving the white color of the white pigment on the front surface. By moving a rod-like magnetic pen with its writing end in contact with the white surface of the display, magnetic particles in the scribed area is brought to the front surface, thus forming an image.

Another magnetic display system is known, which utilizes a non-magnetic substrate coated with a layer of microcapsules containing magnetic particles, and a permanent magnet as means to form and erase an image.

Of these prior art magnetic display systems, the former forms an image with a shift of magnetic particles in honeycomb-like cavities from the back surface to the front surface. Thus, it is impossible to obtain an image resolution sharper than the cavity's size. In addition, the provision of a mold for forming the honeycomb-like cavity and the step of sealing the white pigment dispersed in liquid together with magnetic particles can not be readily attained. Further, it is technically substantially impossible to make a display board providing honeycomb-like cavities in a size as large as a blackboard. Further, it is technically extremely difficult to seal the white pigment dispersed in liquid together with magnetic particles in honeycomb-like cavities provided over the entire surface of such large size display. Further, it is also not easy to provide a small-size display like a pocket-size one due to the construction noted above. Therefore, the former display system can find only limited applications. At any rate, for formation of an image the total amount of magnetic particles in each honeycomb-like cavity are shifted from the back surface to the front surface, and therefore it is impossible to form a sharp image. Besides, when the display board is held vertically for lengthy time, after formation of an image, magnetic particles in the honeycomb-like cavity tend to sink to the bottom thereof. Further, it is difficult to provide a display board having a free size.

The latter magnetic display system is far superior to the former display system with the white pigment and magnetic particles dispersed in liquid sealed in honeycomb-like cavity of a plastic molding in that the quality of images that can be formed is very superior, that the polarity orientation of magnetic particles can be changed with a very slight magnetic flux density and that a display having a desired size can be readily obtained. However, this system requires as magnetic particles those of nickel or alloys thereof, capable of providing surface gloss and having a flaky shape (i.e., a flat and elongate shape) than those of ferrite or ordinary iron oxide as obtainable by mass production as well as readily capable of polarization because it is necessary to provide strong contrast between light absorption when the particles are orientated vertically and light reflection when the particles are orientated horizontally. This leads to cost increase.

The present invention seeks to solve the problems inherent in the above two different prior art magnetic display systems.

According to the present invention, there is provided a magnetic display system which corresponds to the definition given in claim 1.

According to the present invention, a multi-pole magnetized permanent magnet is used as said magnetic means for causing shift by attraction of light-absorptive magnetic particles in microcapsules toward the back side of said display over the entire surface of said microcapsule coating layer.

According to the present invention, a rod-like permanent magnet which is magnetized in the length direction is further used as said magnetic means for causing shift by attraction of magnetic particles in microcapsules in local areas of said display toward the front surface thereof for forming characters or like images on the display surface.

Microcapsules, in which magnetic particles having a light-absorptive character and non-magnetic particles having a highly light-reflective surface character are sealed together with a dispersion liquid, are coated on display board, and elongate strips of ferrite-containing plastic material having a width of several centimeters are formed in a from one end to the other end on the back surface of the display. By moving a megnetic means which is multi-pole magnetized in the length direction, relative to the display in a direction perpendicular to the direction of the magnetization pitch, magnetic particles in the microcapsules are shifted by attraction toward the back side of the display, while non-magnetic particles in the microcapsules are shifted toward the front surface of the display. As a result, the entire display surface shows the color of reflected light from the non-magnetic particles.

Then, by contacting a desired portion of the display surface, the entirety of which is providing the color of reflection, with a tip of a pen-like permanent magnet, for instance, which is two-pole magnetized, magnetic particles in microcapsules in the contacted area is shifted by attraction toward the front side of the display, while non-magnetic particles in that area are shifted toward the back side In this way, black characters or like images may be formed on the display front surface with light absorption by magnetic particles. For erasing characters or like images, the back surface of the display is swept from one end to the other end with the multi-pole magnetized magnetic means. As a result, the characters or the like are erased, so that the entire display surface again provides color of reflected light from the non-magnetic particles.

### BRIEF DESCRIPTION OF THE DRAWINGS

Fig. 1 is an explanation view showing a display according to the present invention;
Fig. 2 is an explanation view showing the display and a magnetic means mounted over the entire area of the display for causing shift by attraction of magnetic particles in microcapsules to lower portion of each microcapsule, i.e., to the back side of the display;
Fig. 3 is a perspective view, to an enlarged scale, showing the magnetic means shown in Fig. 2;
Fig. 4 is an explanation view showing a state, in which magnetic particles in microcapsules are shifted by attraction to lower portion of each microcapsule, i.e., to the back side of the display over the entire surface thereof;
Fig. 5 is an enlarged-scale sectional view showing a microcapsule;
Fig. 6 is an explanation view showing a magnetic means for forming characters or like images on the display surface;
Fig. 7 ia an expalnation view for explaining interchange in microcapsules when forming characters or like images on the display surface; and
Fig. 8 is an enlarged-scale sectional view showing a microcapsule in the state shown in Fig. 7.

### DETAILED DESCRIPTION OF THE PREFERRED EMBODIMENTS

Now, an embodiments of the present invention will be described with reference to the accompanying drawings.

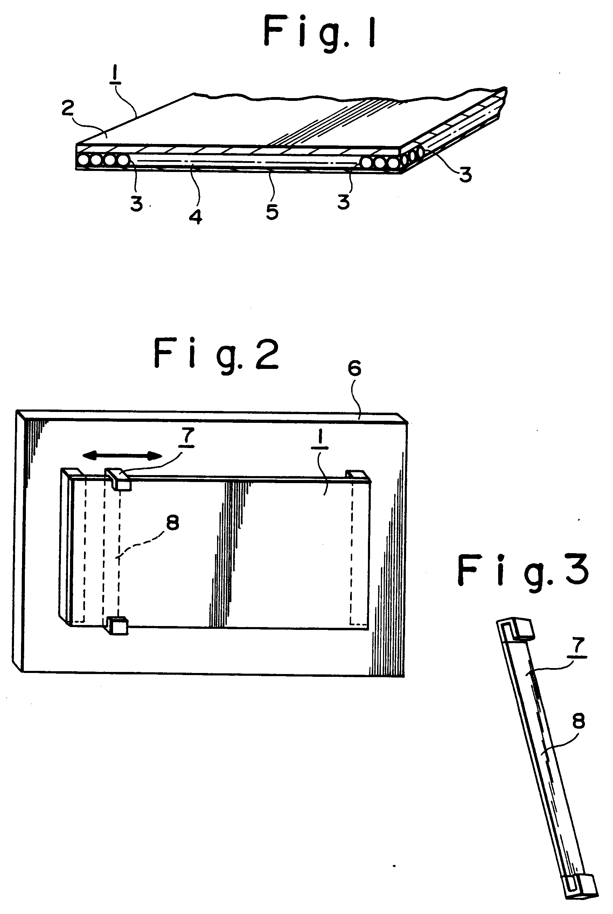

Referring to Fig. 1, there is shown a display generally designated at numeral 1. This display 1 comprises non-magnetic substrate 2, microcapsule coating layer 4 provided on the entire back surface of the substrate 2 and consisting of microcapsules 3, in which light-absorptive magnetic particles 10 and light-reflective non-magnetic particles 11 consisting of a pigment or a dye are sealed, and protective layer 5 provided on the side of the microcapsule coating layer 4 opposite the substrate 2 to prevent rupture of the microcapsules 3 by frictional pressure. The non-magnetic substrate 2 may be made of any material and have any shape so long as it is a transparent non-magnetic member. In this embodiment, the substrate 2 is made from a transparent sheet.

Fig. 2 shows the display 1 provided on the surface of support 6.

Now, the microcapsules 3, in which light-absorptive magnetic particles 10 and light-reflective non-magnetic particles 11 consisting of a pigment or a dye are sealed, will be described in detail.

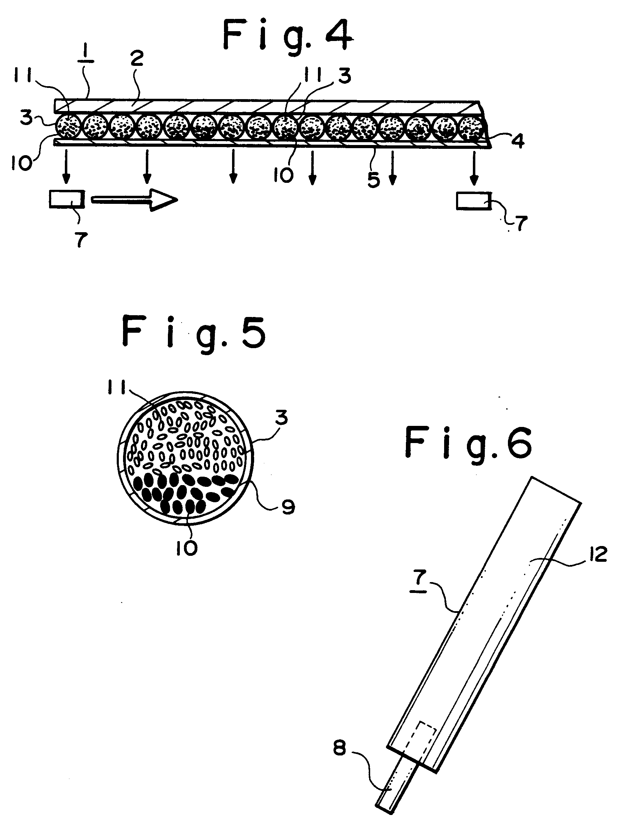

Fig. 5 is an enlarged-scale view showing the microcapsule 3. As an example, as the magnetic particles 10 having excellent light-absorptive character were used black iron oxide particles (Fe₃O₄) with an average diameter of 0.3 ∼ 0.5 micron, and as the non-magnetic particles 11 having excellent light-reflective character and consisting of a pigment or a dye was used white titanium oxide (TiO₂).

The magnetic and the non-magnetic particles 10 and 11 were dispersed by 3% and 17% by weight, respectively, in magnaflux oil.

Then, an aquaous solution containing 11% of Gum Arabic was added to an aquaous solution containing 11% of gelatin and having an isoelectric point corresponding to pH 6. The blend solution was agitated to obtain an aquaous solution a polymer for a microcapsule shell. The system was elevated in temperature to 50° C, and then an aquaous solution containing 21% of sodium hydroxide was added to adjust the pH of the system to 9. The dispersion liquid containing the magnetic and the non-magnetic particles 10 and 11 was added to the aquaous solution system of polymer, and the resultant system was agitated until dispersion liquid drops of 100 ∼ 400 microns were produced.

Thereafter, the pH was gradually reduced to 4.0 to cause precipitation of concentrated gelatin/Gum Arabic rubber liquid at the interface of the dispersion liquid containing the magnetic and the non-magnetic particles 10 and 11. Then, the precipitated film was caused to undergo gelation by lowering the temperature of the system. Then, the skin was hardened by adding an aquaous solution containing 25% of glutaraldehyde, thus obtaining the microcapsules 3, in which the magnetic and the non-magnetic particles 10 and 11 were sealed.

In the above method, the microcapsules 3 were obtained as slurry containing about 20% of the microcapsules 3. The water content of the slurry was then reduced to one half, thus obtaining a condensed slurry with a water content of 35%. To this condensed slurry were added 0.05 part of an aqueous solution containing polyvinyl alcohol 17%, 0.175 part of acryl emulsion with a concentration of 30%, grain size controller agent and slight amounts of de-foaming agent, thus obtaining a coating liquid of the microcapsules 3.

This coating liquid was coated using a curtain coater on the non-magnetic substrate 2 consisting of a 100-micron thick polyethylene telephthalate sheet to a wet thickness of about 400 microns, thus obtaining a sheet of the display 1.

Fig. 2 shows the display 1 with magnetic means 7 mounted on support 6. The magnetic means 7 serves to shift, by attraction, the magnetic particles 10 in individual microcapsules 3 in the microcapsule coating layer 4 coated on the back surface of the display 1 toward the back side thereof over the entire surface thereof. In this instance, elongate or strip-like permanent magnet 8 is used as the magnetic means 7. The magnetic means 7 is moved as a slider over the back surface of the display 1 from one end thereof to the other end. By so doing, the magnetic particles 10 in the microcapsules 3 are shifted by attraction to the back side of the display 1.

The permanent magnet 8 used for the magnetic means 7 has a purpose of shifting, by attraction, the magnetic particles 10 in the microcapsules 3. It has a strip-like shape as shown in Fig. 3. The magnetic means 7 is by no means limited so long as it is a permanent magnet with a surface flux density of about 100 Gauss or above. In this embodiment, a multi-pole magnetized rubber magnet is used as the permanent magnet 8. Such multi-pole magnetized permanent magnet 8 was manufactured as follows.

80% of anisotropic barium ferrite with long axis dimention of 2 ∼ 4 microns and 20% of vulcanized rubber were kneaded together and then molded using an extruder into a sheet having a thickness of about one millimeter. Then, the anisotropic particles of barium ferrite were orientated using a field orientater such that their long axis was directed in the magnetizing direction. Then, saturated magnetism was applied to the sheet using a multi-pole magnetizer, thus producing a rubber magnet magnetized on both sides of the sheet at a pitch of about three microns and with a remanent magnetic flux density (Br) of 1,200 Gauss. The sheet was then cut with the rubber magnet parallel to the magnetizing direction to a width of about 20 millimeters, thus obtaining permanent magnet 8 of this embodiment.

Fig. 4 shows a status inside the microcapsules 3 with the magnetic particles 10 shifted downwardly and the non-magnetic particles 11 shifted upwardly when the magnetic means 7 consisting of multi-pole megnetized strip-like permanent magnet 8 is moved over the back surface of the display 1 from one end thereof to the other end. Fig. 5 shows, to an enlarged-scale, the microcapsule 3 with transparent shell 9, in which the magnetic particles 10 are shifted downwards and the non-magnetic particles 11 are shifted upwards.

When the display 1 in the state, in which the magnetic and the non-magnetic particles 10 and 11 in the microcapsules 3 are shifted upwardly and downwardly, respectively, is looked from the front side, the entire surface of the display 1 has white color due to reflection of incident light by the non-magnetic particles 11.

Fig. 6 shows the magnetic means 7 for forming characters or like images on the surface of the display 1 for displaying characters or like images. It is two-pole magnetized rod-like permanent magnet 8 mounted on holder 12.

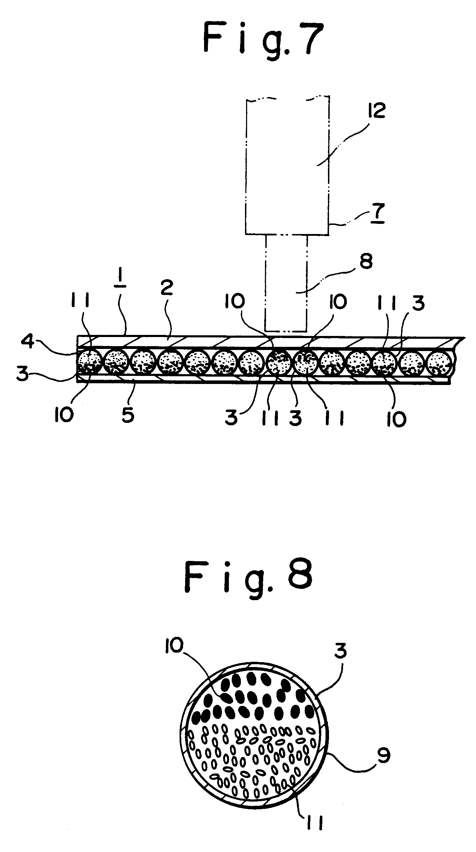

Fig. 7 shows how the magnetic and the non-magnetic particles 10 and 11 are shifted upwardly and downwardly, respectively, in the microcapsules 3 in areas, along which characters or like images are drawn by tracing the surface of the non-magnetic substrate 2 of the display 1, the entirely of which is reflecting white light, with two-pole magnetized rod-like permanent magnet 8 on the holder 12 with the tip of the permanent magnet 8 with remanent magnetic flux density of 1,200 Gauss in contact with the display 1. Fig. 8 shows, to an enlarged-scale, the microcapsule 3 with transparent shell 9, in which the magnetic and the non-magnetic particles 10 and 11 shifted upwardly and downwardly, respectively.

When the portion of the display 1 where the magnetic particles 10 in the microcapsules 3 are shifted upwardly is observed from the front side of the display 1, it is black in color with incident light absorbed by the magnetic particles 10. It is to be understood that with this display 1 the front surface thereof is primarily white light reflection by the non-magnetic particles 11 consisting of white titanium oxide by the operation shown in Fig. 4, and the same surface is subsequently locally changed to black color of light absorption by the magnetic particles 10 by the operation shown in Fig. 6, thus displaying characters and like images.

As has been described in the foregoing, with the magnetic display system according to the present invention, magnetic particles having excellent light-absorptive property and non-magnetic particles having excellent light-reflective property in contrast are sealed in microcapsules such that these two different types of particles are dispersed in oil for interchange in position in each microcapsule, these microcapsules are coated as display elements on a non-magnetic substrate to form a display, positioning of the two different kinds of particles in each microcapsule is primarily effected over the entire display surface by externally providing a magnetic field to the display by a suitable method, and then re-positioning of the two different particles is effected locally to display characters or like images. Thus, the magnetic display system according to the present invention has following very excellent advantages compared to the pertaining magnetic display systems in the prior art.
(1) Since the average diameter of particles forming characters or like images is or the order of maximum 200 microns, sharp characters or like images can be displayed.
(2) There are wide scopes of selection of the light-absorptive magnetic particles and light-reflective non-magnetic particles which are sealed in microcapsules, it is possible to obtain cost reduction by utilizing commercially available mass production particles. Further, color display selection is possible with selected color pigments absorbed on the surface of both the different kinds of particles.
(3) The non-magnetic base used as the substrate of the display may be molded or extrusion formed from various transparent materials such as transparent resins, inorganic glass, butyral-protected glass and fiber glass.
(4) The size of the display can be freely selected by the method of coating the microcapsule coating layer. Further, a desired cut size can be obtained after coating by selecting a material capable of cutting for the substrate. Thus, free selection of the display size is possible from large sizes for outdoor purposes to small sizes such as cards to be accommodated in pockets.
(5) Compared to the prior art displays, the materials used, particularly the magnetic and non-magnetic particles for image formation both are strongly light-resistant, and thus it is possible to provide a display system, which can be used even under very hard conditions.
(6) The display system is free from air polution by dry fine particles of aquaous paint as in the case with a prior art system, in which aquaous paint is used for writing characters or the like on a white board. The display system according to the present invention thus can be used as a perfectly clean display system, which can be used for projection of semiconductor chips and in clean rooms required for precision painting.

## Claims

1. A magnetic display system comprising:
a display (1) including a transparent non-magnetic substrate and a microcapsule coating layer (4) provided under said transparent substrate, said coating layer comprising microcapsules (3) which sealingly contain magnetic particles (10) having an excellent light-absorptive surface character, non-magnetic particles having an excellent light-reflective character and an oily liquid, both said particles being dispersed or dissolved in said oily liquid; and wherein
magnetic means (7) including a permanent magnet (8) are used to form:
first magnetic means for causing a shift by attraction of the light-absorptive magnetic particles (10) within the microcapsules toward the rear side of said display over the entire surface of said microcapsule coating layer and, as a result, causing a shift of light-reflective non-magnetic particles (11) toward the front surface of said display; and
second magnetic means for causing local shift by attraction of the light-absorptive magnetic particles (10) having been shifted by attraction from the rear side of said display to the front side thereof, to thereby invert the position of light-reflective non-magnetic particles (11) in corresponding areas, thereby forming characters or images on the display.

2. The magnetic display system according to claim 1, wherein a multi-pole magnetized permanent magnet is used as said first magnetic means.

3. The magnetic display system according to claim 1, wherein a rod-like permanent magnet magnetized in the length direction is used as said second magnetic means.

## Patentansprüche

1. Magnetische Anzeigevorrichtung mit einer Anzeige (1), die ein transparentes, nicht-magnetisches Substrat und eine Mikrokapselbeschichtung (4), vorgesehen unter dem genannten transparenten Substrat, aufweist, wobei die genannte Beschichtung Mikrokapseln (3) aufweist, die verschlossen magnetische Partikel (10) mit einer exzellenten lichtabsorbierenden Oberflächeneigenschaft, nicht-magnetische Partikel mit einer exzellenten lichtreflektierenden Eigenschaft und eine ölige Flüssigkeit aufweist, wobei die genannten Partikel in der genannten öligen Lösung dispergiert oder gelöst sind, und wobei magnetische Mittel (7), die einen Permantmagneten (8) umfassen, verwendet werden als:
erstes magnetisches Mittel, um durch Anziehung eine Verschiebung der lichtabsorbierenden magnetischen Partikel (10) innerhalb der Mikrokapseln zu der Rückseite der genannten Anzeige über der gesamten Oberfläche der genannten Mikrokapselbeschichtung zu verursachen und als ein Resultat eine Verschiebung der lichtreflektierenden nicht-magnetischen Partikel (11) zu der vorderen Oberfläche der genannten Anzeige zu verursachen; und zweites magnetisches Mittel, um durch Anziehung eine lokale Verschiebung der lichtabsorbierenden magnetischen Partikel (10), die durch Anziehung von der Rückseite der genannten Anzeige zu deren Frontseite verschoben worden sind, zu verursachen, und dadurch die Position der lichtreflektierenden nicht-magnetischen Partikel (11) in den korrespondierenden Gebieten zu invertieren, um dadurch Buchstaben oder Bilder auf der Anzeige zu bilden.

2. Magnetische Anzeigevorrichtung nach Anspruch 1, wobei ein multipol-magnetisierter Permanentmagnet als genanntes erstes magnetisches Mittel verwendet wird.

3. Magnetische Anzeigevorrichtung nach Anspruch 1, wobei ein stabförmiger, in der Längsrichtung magnetisierter Permanentmagnet als genanntes zweites magnetisches Mittel verwendet wird.

## Revendications

1. Système d'affichage magnétique comportant:
un tableau d'affichage (1) incluant un substrat non-magnétique transparent et une couche (4) de micro-capsules de revêtement prévue sous ledit substrat transparent, ladite couche de revêtement comprenant des microcapsules (3) qui contiennent, de façon étanche, des particules magnétiques (10) présentant d'excellentes caractéristiques de surface d'absorption de la lumière, des particules non-magnétiques présentant d'excellentes caractéristiques de réflexion de la lumière, ainsi qu'un liquide huileux, les deux dites particules étant dispersées ou dissoutes dans ledit liquide huileux; et système dans lequel
des moyens magnétiques (7) incluant un aimant permanent (8) sont utilisés pour former:
un premier moyen magnétique pour, par attraction, faire passer les particules magnétiques (10) qui absorbent la lumière et se trouvent dans les micro-capsules vers la face arrière dudit tableau d'affichage sur toute la surface de ladite couche de micro-capsules de revêtement et, de ce fait, faire passer les particules non-magnétiques (11) qui réfléchissent la lumière vers la surface avant dudit tableau d'affichage; et
un second moyen magnétique pour provoquer, par attraction un déplacement local des particules magnétiques (10) qui absorbent la lumière et avaient été déplacées par attraction de la face arrière dudit tableau d'affichage à sa face avant, de façon à inverser la position des particules non-magnétiques (11) réfléchissant la lumière, qui se trouvent dans les zones correspondantes, formant ainsi des caractères ou des images sur le tableau d'affichage.

2. Système d'affichage magnétique selon la revendication 1, dans lequel on utilise, comme dit premier moyen magnétique, un aimant permanent à magnétisation multipolaire.

3. Système d'affichage magnétique selon la revendication 1, dans lequel on utilise, comme dit second moyen magnétique, un aimant permanent en forme de tige magnétisé selon la direction longitudinale.
